# DEMANDE DE BREVET EUROPEEN

(11) **EP 4 678 245 A1**
(43) Date de publication de la demande: **14.01.2026**
(21) Numéro de dépôt: 24306142.1
(22) Date de dépôt: 08.07.2024
(51) Int. Cl.: A62C 2/24, A62C 2/12, F16K 17/38, F16K 1/22

(54) **CLAPET COUPE FEU DE PROTECTION BIDIRECTIONNELLE À AXE DÉCALÉ**

(71) Demandeur: Soletanche Freyssinet, 92500 Rueil Malmaison (FR)
(72) Inventeur: WILLOQUET, Bertrand, 38510 MORESTEL (FR)
(74) Mandataire: Plasseraud IP

(57) **Abrégé**

Dispositif de manoeuvre d'un registre papillon de clapet coupe-feu, ledit registre papillon étant déplaçable entre une position d'ouverture d'un passage dans un tunnel du clapet et une position de fermeture dudit passage, ledit dispositif de manoeuvre comportant un axe (120) de manoeuvre dudit registre décalé par rapport à un diamètre dudit registre, parallèle à ce diamètre et hors du plan dudit registre et comportant un moteur de manoeuvre en rotation de l'axe (120) de manoeuvre, ledit axe (120) est solidarisé à une face du registre (110) au moyen d'au moins une patte de fixation (130) munie de pièces (311, 312) de liaison avec le registre comportant un premier élément fusible (311) fondant à partir d'une premier température maximale de sécurité définie, ledit premier élément fusible (311) étant configuré pour désolidariser ladite patte de fixation et le registre en fondant lorsque la température au niveau de l'axe atteint ladite premier température maximale de sécurité définie.

## Description

### Domaine technique

L'invention relève du domaine des dispositifs de protection incendie de bâtiments et plus particulièrement concerne les clapets coupe-feu disposés dans des conduits entre des locaux de bâtiments industriels ou des conduits d'aération de tels locaux qu'il est nécessaire de confiner lorsqu'un incendie s'y déclare.

### Technique antérieure

Divers types de clapets coupe-feu sont connus. De nombreux clapets comportent notamment un manchon tubulaire appelé aussi tunnel dans lequel est logé un dispositif d'obturation que l'on ferme en cas d'incendie. Lorsque le clapet est fermé, le tunnel et le dispositif d'obturation sont conçus pour réaliser une barrière étanche au feu et isolée thermiquement empêchant toute propagation d'un feu d'un côté à l'autre du clapet pendant une durée correspondante aux conditions imposées à de tels clapets.

Le dispositif d'obturation est généralement constitué d'une lame pivotant dans un cadre, la lame étant aussi appelé registre papillon que l'on simplifiera en « registre » ci-après. Le registre pivote entre une position fermée séparant un côté intérieur, par exemple l'intérieur d'un local, d'un côté extérieur par exemple l'extérieur d'un bâtiment ou un autre local et une position ouverte permettant une communication entre les deux côtés par exemple pour ventiler le local.

Le registre peut être un dispositif carré, rectangulaire ou circulaire sous la forme d'un disque rotatif articulé pour soit ouvrir le passage pour des gaz dans le tunnel soit fermer le passage et le rendre étanche.

Certains clapets comportent un registre sous la forme d'un disque muni d'un axe de rotation central dans le disque et le traversant selon un diamètre du disque. Ce montage oblige à réaliser des profils de joints d'étanchéité inversés de chaque côté de l'axe ce qui complique la réalisation du disque et des portées le recevant dans le tunnel. D'autres clapet comportent un axe de manoeuvre hors du plan du disque et décalé d'un côté du disque par rapport à un diamètre du disque ce qui permet de réaliser le disque et la portée le recevant avec un profil d'étanchéité continu par exemple conique. Un tel clapet à axe de manoeuvre décalé est connu du document FR 2 691 636 A1.

### Problème technique

Un problème des clapets à axe décalé est qu'ils ne sont pas normalement réversibles c'est-à-dire qu'ils protègent uniquement d'un incendie se déclarant du côté du registre papillon opposé à l'axe de manoeuvre. En effet, dans le cas d'un incendie se déclarant du côté de l'axe de manoeuvre l'échauffement de l'axe et du dispositif de manoeuvre peut les déformer ou les bloquer ce qui peut conduire soit à pousser le registre papillon et le désolidariser de sa butée périphérique d'étanchéité soit à empêcher sa fermeture.

### Exposé de l'invention

Au vu de cette situation la présente divulgation propose selon un premier aspect un dispositif de manoeuvre d'un registre papillon de clapet coupe-feu , ledit registre papillon étant déplaçable entre une position d'ouverture d'un passage dans un tunnel du clapet et une position de fermeture dudit passage, ledit dispositif de manoeuvre comportant un axe de manoeuvre dudit registre décalé par rapport à un diamètre dudit registre, parallèle à ce diamètre et hors du plan dudit registre et comportant un moteur de manoeuvre en rotation de l'axe de manoeuvre, pour lequel ledit axe est solidarisé à une face du registre au moyen d'au moins une patte de fixation munie de pièces de liaison avec le registre comportant un premier élément fusible fondant à partir d'une premier température maximale de sécurité définie, ledit premier élément fusible étant configuré pour désolidariser ladite patte de fixation et le registre en fondant lorsque la température au niveau de l'axe atteint ladite premier température maximale de sécurité définie.

Ladite patte de fixation peut avantageusement comporter une première partie traversé par ledit axe, solidarisée avec l'axe et comporter une seconde partie percée de trous de réception de vis de fixation de ladite patte de fixation sur le registre, lesdites vis étant reçues dans des pièces de liaison , constituant ledit premier élément fusible, conformées en colonnettes et pourvues de collerettes d'appui positionnée entre des têtes desdites vis et une face d'appui autour desdits trous de ladite seconde partie.

Selon un mode de réalisation particulier, ledit axe de manoeuvre peut être solidarisé au registre au moyen de deux desdites pattes de fixation munies de pièces de liaison avec le registre comportant ledit premier élément fusible, ces pattes de fixation étant disposées de part et d'autre d'une patte de fixation dépourvue desdits éléments fusibles disposée centrée par rapport à un diamètre du registre et constituant un point de fixation ne désolidarisant pas l'axe et le registre en cas de feu.

Le premier élément fusible de la liaison axe/obturateur peut être choisi pour rester solide et rigide jusqu'à une température d'au moins 350°C et au plus de 450°C.

Un deuxième élément fusible en forme de plaquette peut éventuellement être positionné entre la ladite patte de fixation et ladite face du registre .

Le premier et le deuxième élément fusible sont par exemple choisis parmi le polybenzimidazole ou le polyimide.

La présente divulgation concerne selon un deuxième aspect complémentaire ou indépendant un dispositif de manoeuvre d'un registre papillon de clapet coupe-feu, ledit registre papillon étant déplaçable entre une position d'ouverture d'un passage dans un tunnel du clapet et une position de fermeture dudit passage, ledit dispositif de manoeuvre comportant un axe de manoeuvre dudit registre décalé par rapport à un diamètre dudit registre, parallèle à ce diamètre et hors du plan dudit registre et comportant un moteur de manoeuvre en rotation de l'axe de manoeuvre, le dispositif de manoeuvre comportant un dispositif de verrouillage de l'axe en rotation configuré pour s'enclencher lorsque la température au niveau de l'axe atteint une température de consigne de libération du mécanisme de rotation du moteur en position de fermeture du registre.

Le dispositif de verrouillage peut être un dispositif de clavette mobile.

Le dispositif de verrouillage est avantageusement maintenu en position armée par un lien ou maillon fusible retenant un ressort de rappel du dispositif de verrouillage tant que la température au niveau de l'axe reste inférieure à une température de consigne et libérant ledit ressort lorsque la température au niveau de l'axe atteint ou dépasse ladite température de consigne faisant passer le dispositif de verrouillage dans une position déclenchée telle qu'une rotation de l'axe en position de fermeture du registre enclenche le dispositif de verrouillage avec un plat de l'axe de manoeuvre et bloque l'axe de manoeuvre en position de fermeture du registre, le dispositif de verrouillage comportant un détecteur activé par la libération du ressort et configuré pour faire tourner le moteur en position de fermeture du clapet.

Le lien fusible est un lien ou maillon fusible à alliage eutectique calibré entre 70°C et 80°C, la température de consigne étant la température de fusion dudit alliage eutectique.

Ledit moteur est préférablement monté sur une platine de fixation du moteur par rapport au clapet coupe-feu avec des moyens de fixation comportant un troisième élément fusible fondant à partir d'une troisième température maximale de sécurité définie positionné en sorte de désolidariser lesdits moyens de fixation et désolidariser le moteur de la platine lorsque la température au niveau de la fixation du moteur dépasse ladite troisième température en sorte de libérer l'axe de manoeuvre .

Le troisième élément fusible réalisant la liaison platine/moteur est choisi pour rester solide et rigide au moins dans les deux premières minutes d'un incendie jusqu'à une température d'au moins 100 °C et d'au plus 450°C.

Le troisième élément fusible est par exemple en polypropylène.

La présente divulgation concerne en outre un clapet à registre papillon pour lequel le moteur est piloté par un dispositif de commande comportant au moins un capteur de température.

Le moteur est préférablement piloté par un dispositif de commande comportant un premier capteur de température dans un conduit en aval du clapet par rapport à une salle à confiner et un deuxième capteur de température au niveau du moteur.

Le deuxième capteur de température est avantageusement constitué dudit lien ou maillon fusible agissant sur un contact de mise en route moteur.

### Brève description des dessins

D'autres caractéristiques, détails et avantages de l'invention apparaîtront à la lecture de la description détaillée ci-après d'exemples de réalisation non limitatifs, et à l'analyse des dessins annexés, sur lesquels :
[Fig. 1] montre un exemple schématique en vue de dessus de locaux, équipés d'un clapet coupe-feu;
[Fig. 2A] montre un exemple de clapet coupe-feu selon la présente divulgation en vue de face;
[Fig. 2B] montre le clapet coupe-feu de la figure 2A en vue de dessus coupe;
[Fig. 3] montre un détail d'un exemple de fixation de registre de clapet;
[Fig. 4] montre un moteur de commande d'un axe de manoeuvre d'un registre au-dessus d'un dispositif de blocage de l'axe de manoeuvre d'un registre ;
[Fig. 5] montre un détail de fixation du moteur de la figure 4 au-dessus de l'axe de manoeuvre du registre;
[Fig. 6A] montre le dispositif de blocage de la figure 5 en position armée en vue de dessus;
[Fig. 6B] montre le dispositif de blocage de la figure 5 en position déclenchée en vue de dessus.

### Description des modes de réalisation

Les dessins et la description ci-après contiennent des éléments pouvant non seulement servir à mieux faire comprendre la présente invention, mais aussi contribuer à sa définition, le cas échéant.

Certains clapets coupe-feu, ont l'axe de manoeuvre de leur registre en dehors du plan d'obturation.

Cette disposition permet, lorsqu'ils sont fermés, d'avoir la périphérie de leur registre en appui sur leur siège sans discontinuité. A contrario, les clapets dont l'axe de manoeuvre est dans le plan du registre ont leurs sièges qui s'inversent à l'emplacement des passages d'axe. Cette inversion se fait, en général, au détriment de l'étanchéité amont/aval.

Les clapets coupe-feu qui ont l'axe de manoeuvre de leur registre en dehors du plan d'obturation sont aussi appelés clapets à axe décalé.

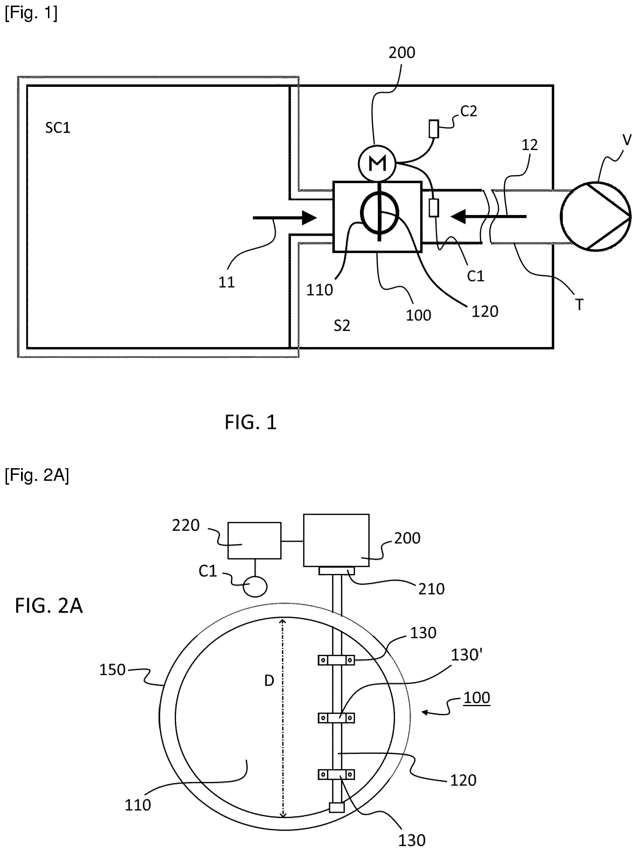

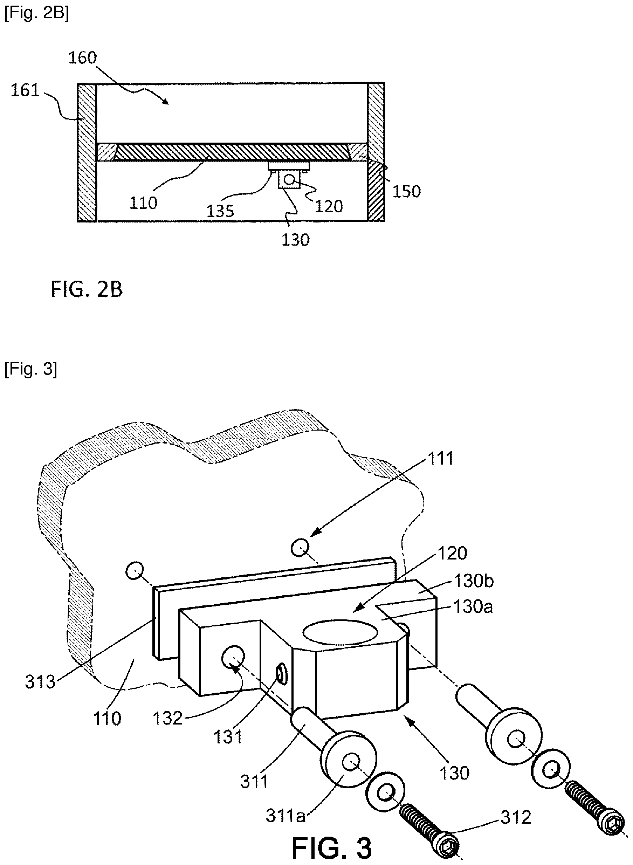

La présente divulgation concerne un clapet 100 à axe 120 décalé selon les figures 2A et 2B. Le clapet comporte un registre papillon 110 déplaçable entre une position d'ouverture d'un passage dans un tunnel 160 du clapet 100 et une position de fermeture dudit passage. Le registre est manoeuvré par un dispositif de manoeuvre comportant un axe 120 de manoeuvre dudit registre décalé par rapport à un diamètre D dudit registre, parallèle à ce diamètre D et hors du plan dudit registre. L'axe est manoeuvré en rotation par un moteur 200.

Lorsque l'axe de pivotement est décalé, le clapet réagit différemment selon le sens du feu :
Dans le sens favorable, lorsque le clapet est fermé, le registre protège l'axe de manoeuvre de la température du feu.

Dans l'autre sens, l'axe n'est pas protégé, alors il subit directement, c'est-à-dire sans protection thermique, la température du feu.

Il est maintenant fait référence à la figure 1 qui représente une partie de bâtiment avec une première salle confinée SC1 reliée au travers d'un clapet coupe-feu à une tubulure T et une ventilation d'extraction V, la tubulure T traversant une seconde salle S2. Un premier capteur C1 est positionné dans le conduit T en aval du clapet par rapport à la salle confinée SC1. Un second capteur C2 est disposé dans la seconde salle S2 qui n'est pas confinée.

Dans le cas d'un départ de feu dans la salle confinée SC1 la chaleur se propage dans le sens de la flèche 11 et le premier capteur C1 détecte une montée de température et actionne le moteur de manoeuvre du registre du clapet dans le sens fermeture à partir de la température de calibration du premier capteur C1.

Le moteur 200 et l'axe de manoeuvre du clapet ne sont pas dans ce cas soumis au feu et conservent leur capacité à maintenir le registre fermé.

Dans le cas d'un départ de feu dans la salle S2, la température croît dans le sens de la flèche 12 et même si le deuxième capteur C2 est configuré pour détecter le départ de feu dès une faible élévation de température et actionner le registre pour le mettre en position de fermeture du clapet. Ensuite, la température qui s'élève dans la salle S2 va dégrader le moteur 200 et l'axe 120 de manoeuvre du clapet. Dans un tel cas, d'une part le moteur 200 se dégradant risque de ne plus maintenir l'axe 120 de manoeuvre du clapet en fermeture et, d'autre part, l'axe se dilatant risque de déformer et déchausser le registre 110 de sa portée 150 selon la figure 2B.

De même le moteur appuie sur l'axe et accroît sa déformation côté registre.

Il y a donc lieu de libérer le moteur pour laisser une possibilité à l'axe de se dilater vers l'extérieur du clapet.

Par ailleurs pour éviter que le registre quitte la position de fermeture, il est souhaitable de bloquer l'axe en rotation lorsqu'il est en position de fermeture du registre.

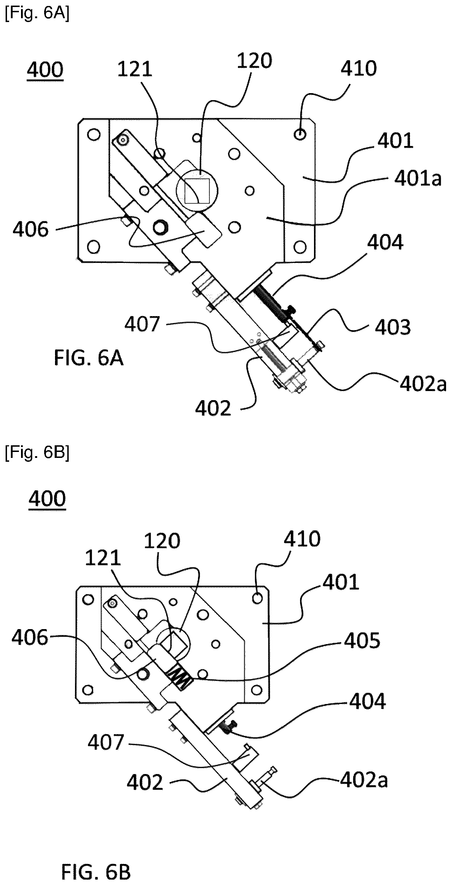

Pour ce faire, selon un aspect de l'invention, décrit aux figures 6A et 6B et qui peut être réalisé indépendamment, le dispositif de manoeuvre du registre papillon comporte un dispositif de verrouillage 406 de l'axe en rotation configuré pour s'enclencher lorsque la température au niveau de l'axe atteint une température de consigne. Ceci a pour but de maintenir l'axe bloqué en rotation une fois que ce dernier a mis le registre en position de fermeture lorsque la température a atteint au niveau de l'axe la température de consigne.

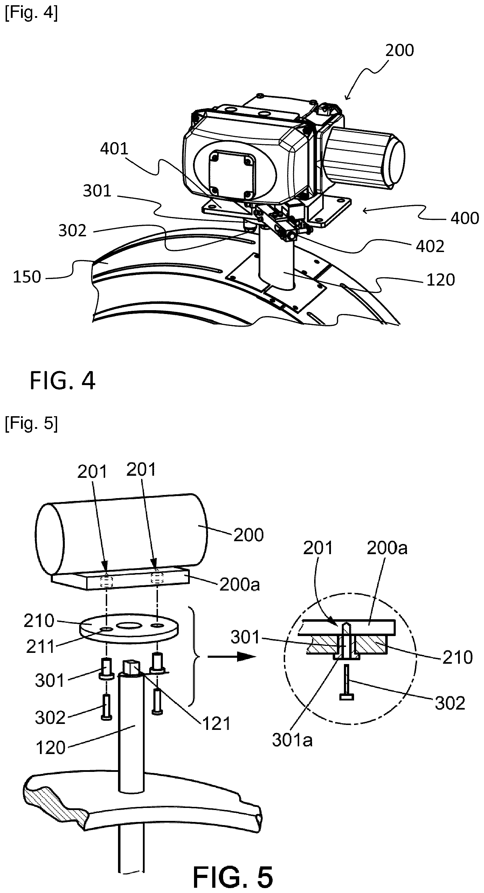

Ce dispositif de verrouillage 406 est positionné sur le support 400 enserré entre le moteur 200 et la platine 210 de fixation du moteur traversée par l'axe de manoeuvre et représentée en figure 5.

Selon l'exemple en figure 6A, le dispositif de verrouillage 406 est maintenu en position armée par un lien fusible 403 qui peut notamment être un maillon fusible retenant en position comprimée un ressort de rappel 405 du dispositif de verrouillage tant que la température au niveau de l'axe 120 reste inférieure à une température de consigne. Lorsque la température au niveau de l'axe atteint ou dépasse ladite température de consigne, le lien fusible 403 fond, le ressort 405 est libéré faisant passer le dispositif de verrouillage 406 dans une position déclenchée telle qu'une rotation de l'axe en position de fermeture du registre enclenche le dispositif de verrouillage 406 avec un plat 121 de l'axe 120 de manoeuvre ce qui bloque l'axe de manoeuvre 120 en position de fermeture du registre selon la figure 6B.

Associé à ce dispositif de manoeuvre, un contact électrique ou déclencheur électrique 407 lance la rotation du moteur en position de fermeture du clapet lorsque le lien fusible se rompt.

Le lien fusible est ainsi configuré pour inhiber le contact électrique 407 de mise en route moteur et, sa rupture active le contact de mise en route moteur.

Le seuil de déclenchement du deuxième capteur C2, calibré à une température en général d'environ 70°C à 80°C, par exemple 74°C détecte le feu dans le secteur sans matière nucléaire ou à risque environnemental. Il pilote la fermeture du clapet au travers du contact ou déclencheur 407 en contact avec la tige 404 tant que le lien fusible 403 est présent selon la figure 6A et déclenche la rotation du moteur une fois que le switch n'est plus en contact avec la tige 404 ainsi que le verrouillage de l'axe de manoeuvre en fermeture sans possibilité de rouvrir le clapet lorsque le lien fusible est rompu selon la figure 6B. Le capteur de température C2 est dans ce cas le lien fusible 403 retenant le ressort de rappel. Ce lien fusible est par exemple un maillon fusible à alliage eutectique calibré à 74 °C, la température de consigne pour la mise en rotation du moteur et en position de fermeture du clapet et le déclenchement du dispositif de blocage étant la température de fusion dudit alliage eutectique. Selon ce mode de réalisation, le deuxième capteur C2 se trouve être le lien fusible.

Selon l'exemple le ressort et une partie de l'axe 404 au bout duquel se trouve l'élément de verrouillage 406 en forme de clavette mobile est positionné sous un capot 401a pour être protégé.

Selon un mode de réalisation complémentaire ou indépendant, selon la figure 4, le moteur 200 est monté avec des moyens de fixation 301, 302 sur une platine 210 de fixation du moteur sur le clapet coupe-feu. Entre la platine 210 et le moteur 200 se trouve un dispositif de blocage de l'axe sur un support 400 qui sera décrit plus loin. Selon la figure 5, une vue simplifiée où a été omis le support 400, le moteur comporte un socle 200a pourvu de taraudages 201 de réception de vis 302 traversant des trous 211 de la platine 210. Les vis passent au travers de colonnettes 301 pourvue d'une collerette 301a se logeant entre la platine et les têtes des vis 302 pour réaliser une surface d'appui de ces têtes de vis pour fixer le moteur. Les colonnettes 301 constituent un troisième élément fusible 301 fondant à partir d'une troisième température maximale de sécurité définie, par exemple à au moins 105°C. Les colonnettes sont positionnées en sorte de libérer les têtes de vis afin de désolidariser les moyens de fixation du moteur et désolidariser le moteur 200 de la platine 201 lorsque la température au niveau de la fixation du moteur dépasse ladite troisième température. Lorsque le moteur sort de sa fixation, l'axe de manoeuvre 120 est libéré au niveau de son extrémité 121 d'entraînement. Ce troisième élément fusible, choisi pour rester solide et rigide jusqu'à une température d'au moins 105 °C est par exemple réalisé en polypropylène.

La présente divulgation propose aussi un système de protection complémentaire ou indépendant dans le cas où l'axe se dilate côté fixations du registre. En effet si la température croît au niveau de l'axe, il peut être souhaitable de désolidariser les fixations de l'axe sur le registre pour éviter des contraintes sur ce dernier qui le déplaceraient hors de sa position de fermeture du clapet. Ce système est utilisé pour pallier l'allongement de l'axe du fait de sa dilatation sous l'effet de la température et éviter que sa liaison avec le registre 110 transmette des efforts sur ce registre et le déforme ou le déchausse du siège ce qui peut engendrer des fuites amont/aval susceptible de remettre en cause le caractère coupe-feu du clapet.

Selon la figure 2A, l'axe 120 est solidarisé à une face du registre 110 au moyen d'au moins une patte de fixation 130. Selon la figure 3, une patte de fixation 130 est munie de pièces 311, 312 de liaison avec le registre comportant un premier élément fusible 311 fondant à partir d'une première température maximale de sécurité définie, ledit premier élément fusible 311 étant configuré pour désolidariser ladite patte de fixation et le registre en fondant lorsque la température au niveau de l'axe atteint ladite première température maximale de sécurité définie.

La patte de fixation 130 comporte une première partie 130a traversé par ledit axe 120, serrée sur l'axe au moyen d'une vis ou solidarisée à l'axe au moyen d'une goupille 131 traversant l'axe. La patte de fixation comporte une seconde partie 130b percée de trous 132 de réception de vis 312 de fixation de ladite patte de fixation sur le registre, lesdites vis 312 étant reçues dans les pièces de liaison 311 formées par des colonnettes ou chemises disposées autour des vis 312 dans les trous 132 au contact de la paroi des trous et du corps des vis et pourvues de collerettes d'appui 311a positionnée entre des têtes desdites vis et une face d'appui autour desdits trous 132 de ladite seconde partie pour permettre aux têtes de vis de diamètre inférieur au diamètre des trous d'être serrées pour bloquer la patte sur le registre. Les colonnettes constituent ledit premier élément fusible qui en fondant libère les tête de vis et permet aux vis de coulisser dans les trous 132 ce qui désolidarise les pattes de fixation 130 et le registre 110.

Selon la taille du registre, l'axe de manoeuvre 120 peut être solidarisé au registre au moyen d'une seule patte de fixation pourvue des premiers éléments fusibles, au moyen de deux pattes de fixation chacune pourvue des premiers éléments ou pourvu de trois pattes de fixation, deux desdites pattes de fixation 130 étant munies de pièces de liaison avec le registre comportant des premiers éléments fusible, ces pattes de fixation étant disposées de part et d'autre d'une patte de fixation 130' dépourvue desdits éléments fusibles. Dans ce cas la patte de fixation 130' est disposée centrée par rapport à un diamètre du registre et constitue un point de fixation ne désolidarisant pas l'axe et le registre en cas de feu.

Comme représenté en figure 3 un deuxième élément fusible en forme de plaquette 313 peut être positionné entre la ladite patte de fixation 130 et ladite face du registre 110. Un tel élément s'il est prévu va participer à la désolidarisation de la patte et du registre.

Dans la dynamique du système, il y a trois seuils de température à considérer :
Le seuil de déclenchement du capteur C1 détectant un feu dans le conduit relié à la salle à confiner SC1, calibré à une température entre 70 et 400 °C selon le cas d'utilisation. Ce capteur détecte le feu dans le secteur pouvant contenir de la matière nucléaire ou dont la dissémination constitue un risque environnemental. Le capteur C1 pilote le clapet en fermeture sans verrouiller l'axe de manoeuvre en fermeture avec la possibilité de rouvrir le clapet.

Le seuil de fusion des matières structurelles fusibles au niveau des fixations du capet par exemple à partir de 400 ° C permet de libérer les contraintes de dilatation sur l'axe et sur le clapet. En effet, au-delà de 400 °C, il ne sera plus question de rouvrir le clapet.
Les pièces liaisons fusibles sont des pièces structurelles fusibles réalisées dans des matériaux suffisamment rigides pour assurer le fonctionnement du clapet à basse température lorsque le clapet est ouvert, mais ont un seuil de fusion suffisamment bas pour suspendre les transmissions d'efforts une fois que le clapet est fermé lors d'un incendie. Des matières structurelles fusibles utilisables sont selon les températures de fusion souhaitées des thermoplastiques restant solides et rigides jusqu'à une température d'au moins 350°C et au plus 450°C tels le polybenzimidazole ou le polyimide.

### Application industrielle

L'invention peut trouver à s'appliquer notamment aux clapets de protection au feu dans les locaux annexes des centrales nucléaires ou les centres de retraitement des combustibles nucléaires.

L'invention ne se limite pas aux exemples décrits ci-avant mais elle englobe toutes les variantes que pourra envisager l'homme de l'art dans le cadre des revendications. En particulier, le clapet montré en position verticale avec un axe vertical et un moteur au-dessus du registre en figure 2A peut être monté avec l'axe horizontal et le moteur positionné latéralement par rapport au registre ou être monté horizontalement avec l'axe de manoeuvre du registre au-dessus ou au-dessous du registre.

## Revendications

1. Dispositif de manoeuvre d'un registre papillon (110) de clapet coupe-feu (100), ledit registre papillon étant déplaçable entre une position d'ouverture d'un passage dans un tunnel (160) du clapet (100) et une position de fermeture dudit passage, ledit dispositif de manoeuvre comportant un axe (120) de manoeuvre dudit registre décalé par rapport à un diamètre (D) dudit registre, parallèle à ce diamètre (D) et hors du plan dudit registre et comportant un moteur (200) de manoeuvre en rotation de l'axe (120) de manoeuvre, **caractérisé en ce que** ledit axe (120) est solidarisé à une face du registre (110) au moyen d'au moins une patte de fixation (130) munie de pièces (311, 312) de liaison avec le registre comportant un premier élément fusible (311) fondant à partir d'une premier température maximale de sécurité définie, ledit premier élément fusible (311) étant configuré pour désolidariser ladite patte de fixation et le registre en fondant lorsque la température au niveau de l'axe atteint ladite premier température maximale de sécurité définie.

2. Dispositif de manoeuvre selon la revendication 1, pour lequel ladite patte de fixation comporte une première partie (130a) traversé par ledit axe (120), solidarisée avec l'axe et comporte une seconde partie (130b) percée de trous (132) de réception de vis (312) de fixation de ladite patte de fixation sur le registre, lesdites vis (312) étant reçues dans des pièces de liaison (311), constituant ledit premier élément fusible, conformées en colonnettes et pourvues de collerettes d'appui (311a) positionnée entre des têtes desdites vis et une face d'appui autour desdits trous de ladite seconde partie.

3. Dispositif de manoeuvre selon la revendication 1 ou 2, pour lequel ledit axe de manoeuvre (120) est solidarisé au registre au moyen de deux desdites pattes de fixation (130) munies de pièces de liaison avec le registre comportant ledit premier élément fusible, ces pattes de fixation étant disposées de part et d'autre d'une patte de fixation (130') dépourvue desdits éléments fusibles disposée centrée par rapport à un diamètre du registre et constituant un point de fixation ne désolidarisant pas l'axe et le registre en cas de feu.

4. Dispositif de manoeuvre selon la revendication 1, 2 ou 3, pour lequel le premier élément fusible de la liaison axe/obturateur est choisi pour rester solide et rigide jusqu'à une température d'au moins 350°C et au plus de 450°C.

5. Dispositif de manoeuvre selon l'une quelconque des revendications 1 à 4, pour lequel un deuxième élément fusible en forme de plaquette (313) est positionné entre la ladite patte de fixation (130) et ladite face du registre (110).

6. Dispositif de manoeuvre selon la revendication 5, pour lequel, le premier et le deuxième élément fusible sont en polybenzimidazole ou en polyimide.

7. Dispositif de manoeuvre d'un registre papillon (110) de clapet coupe-feu (100), ledit registre papillon étant déplaçable entre une position d'ouverture d'un passage dans un tunnel (160) du clapet (100) et une position de fermeture dudit passage, ledit dispositif de manoeuvre comportant un axe (120) de manoeuvre dudit registre décalé par rapport à un diamètre (D) dudit registre, parallèle à ce diamètre (D) et hors du plan dudit registre et comportant un moteur (200) de manoeuvre en rotation de l'axe (120) de manoeuvre, **caractérisé en ce qu'**il comporte un dispositif de verrouillage (406) de l'axe en rotation configuré pour s'enclencher lorsque la température au niveau de l'axe atteint une température de consigne de libération du mécanisme de rotation du moteur en position de fermeture du registre.

8. Dispositif de manoeuvre selon la revendication 7, pour lequel le dispositif de verrouillage (406) est un dispositif de clavette mobile.

9. Dispositif de manoeuvre selon la revendication 7 ou 8 pour lequel le dispositif de verrouillage (406) est maintenu en position armée par un lien ou maillon fusible (403) retenant un ressort de rappel (405) du dispositif de verrouillage tant que la température au niveau de l'axe (120) reste inférieure à une température de consigne et libérant ledit ressort (405) lorsque la température au niveau de l'axe atteint ou dépasse ladite température de consigne faisant passer le dispositif de verrouillage (406) dans une position déclenchée telle qu'une rotation de l'axe en position de fermeture du registre enclenche le dispositif de verrouillage (406) avec un plat (121) de l'axe (120) de manoeuvre et bloque l'axe de manoeuvre (120) en position de fermeture du registre, le dispositif de verrouillage comportant un détecteur (407) activé par la libération du ressort et configuré pour faire tourner le moteur en position de fermeture du clapet.

10. Dispositif de manoeuvre selon la revendication 9, pour lequel le lien fusible est un lien ou maillon fusible à alliage eutectique calibré entre 70°C et 80°C, la température de consigne étant la température de fusion dudit alliage eutectique.

11. Dispositif de manoeuvre selon l'une quelconque des revendications précédentes pour lequel ledit moteur (200) est monté sur une platine (210) de fixation du moteur par rapport au clapet coupe-feu avec des moyens de fixation (301, 302) comportant un troisième élément fusible (301) fondant à partir d'une troisième température maximale de sécurité définie positionné en sorte de désolidariser lesdits moyens de fixation et désolidariser le moteur de la platine lorsque la température au niveau de la fixation du moteur dépasse ladite troisième température en sorte de libérer l'axe de manoeuvre (120).

12. Dispositif de manoeuvre selon a revendication 11, pour lequel le troisième élément fusible réalisant la liaison platine/moteur est choisi pour rester solide et rigide au moins dans les deux premières minutes d'un incendie jusqu'à une température d'au moins 100 °C et au plus 450°C.

13. Dispositif de manoeuvre selon la revendication 12, pour lequel le troisième élément fusible est en polypropylène.

14. Clapet à registre papillon comportant un dispositif de manoeuvre selon l'une quelconque des revendications précédentes, pour lequel le moteur (200) est piloté par un dispositif de commande (220) comportant au moins un capteur de température (C2, C1).

15. Clapet à registre papillon selon la revendication 14 pour lequel le moteur (200) est piloté par un dispositif de commande (220) comportant un premier capteur de température (C1) dans un conduit en aval du clapet par rapport à une salle (SC1) à confiner et un deuxième capteur de température (C2) au niveau du moteur (200).

16. Clapet à registre papillon selon la revendication 15 comportant un dispositif de manoeuvre selon la revendications 9, pour lequel le deuxième capteur de température (C2) est constitué dudit lien ou maillon fusible configuré pour inhiber un contact de mise en route moteur (407) et dont la rupture active le contact de mise en route moteur.
